# EUROPÄISCHE PATENTSCHRIFT

(11) **EP 2 378 239 B1**
(45) Veröffentlichungstag und Bekanntmachung des Hinweises auf die Patenterteilung: **10.05.2017**
(21) Anmeldenummer: 11001691.2
(22) Anmeldetag: 01.03.2011
(51) Int. Cl.: G01B 5/012, G01B 5/008

(54) **Vorrichtung zur Vermessung von Objekten**
Device for measuring objects
Dispositif de mesure d'objets

(30) Priorität: 09.04.2010 DE 102010014329; 12.07.2010 DE 102010026891
(43) Veröffentlichungstag der Anmeldung: 19.10.2011
(73) Patentinhaber: STOTZ FEINMESSTECHNIK GmbH, 70839 Gerlingen (DE)
(72) Erfinder: Stamenkovic, Milan, Dr., 70469 Stuttgart (DE)
(74) Vertreter: Manitz Finsterwald Patentanwälte PartmbB

(56) Entgegenhaltungen:
- DE-A1- 2 857 492
- DE-A1- 3 832 331
- US-A- 4 586 261

## Beschreibung

Die vorliegende Erfindung betrifft eine Vorrichtung zur Vermessung von Objekten, insbesondere ein Koordinatenmessgerät, mit einer Grundplatte zum Stützen eines zu vermessenden Objekts und einem Tastkopf, der mittels eines Aktuators relativ zu dem Objekt verfahrbar ist, um das Objekt berührend anzutasten, wobei der Tastkopf einen insbesondere länglichen Tastkörper, dessen vorderes Ende als Messspitze für einen Kontakt mit dem Objekt ausgebildet ist, trägt, insbesondere in einer Aufnahme lagert.

Vorrichtungen der genannten Art werden insbesondere dazu eingesetzt, geometrische Kenngrößen von Werkstücken zu ermitteln. Das Werkstück wird üblicherweise mit einer mechanischen Aufnahme auf der Grundplatte befestigt. Die Grundplatte ist möglichst massiv gebaut und dient außer dem Stützen des Werkstücks auch als Referenz für ein Koordinatensystem. Das Werkstück muss mechanisch in ausreichender Weise fixiert werden, sodass es sich während der Messung nicht relativ zu der Grundplatte bewegt. Die mechanische Aufnahme darf das Werkstück nicht verformen. Zum Vermessen wird das in der Aufnahme befestigte Werkstück von oben angetastet.

Gängige Koordinatenmessgeräte sind in der Regel für relativ große zu vermessende Objekte ausgelegt. Typischerweise verfügen sie über einen durchschnittlichen Messbereich zwischen 200 mm x 200 mm x 200 mm und 500 mm × 500 mm × 500 mm. Dementsprechend kann der Platzbedarf zur Installation eines gängigen Koordinatenmessgeräts zwischen 1500 mm × 1500 mm × 1500 mm und 4000 mm × 4000 mm × 4000 mm betragen. Derart große Maschinen können überdimensioniert wirken, sofern hauptsächlich relativ kleine Objekte zu vermessen sind, z.B. Objekte von etwa 10 mm × 10 mm × 10 mm Größe. Außerdem besteht das Problem, dass bei einer Vielfalt von zu vermessenden Werkstücksformen die mechanische Aufnahme unerwünscht aufwändig wird und/oder mehrere auswechselbare Aufnahmen vorzusehen sind.

Die US 4 586 261 A offenbart einen Messtaster mit einem Messtisch, einem fest installierten Taster sowie einem beweglichen Taster. Der Verschiebemechanismus für den beweglichen Taster befindet sich in einem unterhalb des Messtischs angeordneten Gehäuse.

Die DE 38 32 331 A1 offenbart eine Messmaschine zur Ermittlung des Durchmessers von Drehteilen, bei welcher ein senkrechter Messarm unterhalb eines zugehörigen Messtisches angeordnet ist und durch einen Schlitz des Messtischs hindurchragt.

Die DE 28 57 492 A1 offenbart ein Messsystem mit einer Basisplatte, einer auf dieser abgestützten Trägerplatte sowie einem Satz Messarme zum Vermessen eines auf der Trägerplatte befestigten Gegenstands. Die Messarme 35 ragen von unten durch in der Trägerplatte ausgebildete Schlitze oder durch eine zentrale Kreisöffnung hindurch und weisen an ihren oberen Enden mechanische, elektrische oder pneumatische Messfühler auf.

Eine Aufgabe der Erfindung besteht darin, eine Vorrichtung zur Vermessung von Objekten anzugeben, die einen verringerten Platzbedarf aufweist und ein flexibles Vermessen unterschiedlicher Objekte ermöglicht.

Diese Aufgabe wird durch eine Vorrichtung mit den Merkmalen von Anspruch 1 gelöst.

Bei einer erfindungsgemäßen Vorrichtung ist der Tastkopf unterhalb der Grundplatte angeordnet, wobei in der Grundplatte wenigstens eine Ausnehmung zum Durchführen zumindest eines Abschnitts des Tastkörpers vorgesehen ist. Es ist also vorgesehen, das Objekt nicht von oben anzutasten sondern von unten. Dies bedeutet eine Abkehr von einem in der Fachwelt gängigen Prinzip, da die bekannten dreidimensionalen Koordinatenmesssysteme sämtlicher Standardbauarten - wie Auslegerbauart, Ständerbauart, Portalbauart oder Brückenbauart - auf einer Antastung des zu vermessenden Objekts oder Werkstücks von oben beruhen.

Demgegenüber wird bei einer erfindungsgemäßen Vorrichtung das Objekt direkt auf die Grundplatte aufgelegt und von unten mit dem Tastkörper angetastet. Durch die Antastung von unten ist es also möglich, das Objekt direkt, d.h. ohne Aufnahme oder Aufnahmehalter, auf die Grundplatte aufzusetzen. Über die Ausnehmung in der Grundplatte kann der Tastkörper mit der Messspitze von unten her in das zu vermessende Objekt eingeführt werden. Die Grundplatte übernimmt so gewissermaßen die Funktion einer mechanischen Werkstückaufnahme. Ein bedeutender Vorteil der Erfindung besteht somit darin, dass unterschiedliche Werkstücke unmittelbar nacheinander vermessen werden können, da keine Aufnahme für die Werkstücke benötigt wird. Es ist also nicht wie beim Stand der Technik erforderlich, für jedes Werkstück die Aufnahme auszutauschen oder anzupassen. Weiterhin kann die Gesamtgröße der Vorrichtung wesentlich verkleinert und der Aufbau vereinfacht werden. Durch die Verringerung des Platzbedarfs sowie die Vereinfachung der mechanischen Aufnahme ergibt sich insgesamt eine Vorrichtung, die sich insbesondere zur effizienten Vermessung relativ kleiner Teile, wie Zahnimplantate, kleiner Bohrungen oder Kegelformen, eignet. Die Antastung mittels des Tastkörpers erfolgt im Übrigen in bekannter Weise, wobei das Erreichen einer Wand des Objekts mittels Dehnungsmessstreifen oder kapazitiver Sensoren festgestellt werden kann. Auch andere Methoden zur Feststellung des Erreichens einer Wand sind möglich.

Erfindungsgemäß ist der Tastkopf mittels des Aktuators zwischen einer Ruheposition, in welcher der Tastkörper nicht über eine Auflagefläche der Grundplatte hinausragt, und einer Betriebsposition, in welcher der Tastkörper von unten durch die Ausnehmung geführt ist und sich die Messspitze oberhalb der Auflagefläche befindet, verfahrbar. In der Ruheposition ist der Tastkörper mit seiner empfindlichen Messspitze geschützt, sodass etwaige Beschädigungen vermieden werden können. Für einen Messvorgang kann der Tastkörper auf einfache Weise wieder durch die Ausnehmung in die Betriebsposition ausgefahren werden. Eine derartige Verfahrbarkeit des Tastkopfs ermöglicht auch einen Wechsel zwischen mehreren voneinander getrennten Ausnehmungen der Grundplatte.

Weiterbildungen der Erfindung sind in den abhängigen Ansprüchen, der Beschreibung sowie den Zeichnungen angegeben.

Gemäß einer Ausgestaltung der Erfindung weist die Grundplatte eine insbesondere ebene Auflagefläche zum direkten Auflegen eines zu vermessenden Objekts auf. Das zu vermessende Objekt kann somit - sofern es ausreichend schwer ist - aufgrund seines Eigengewichts von selbst ortsfest auf der Grundplatte bleiben, sodass spezielle Aufnahmen oder Halterungen eingespart werden können.

Zum Fixieren eines zu vermessenden Objekts auf der Grundplatte kann auch ein Niederhalter vorgesehen sein, welcher dazu ausgebildet ist, das Objekt von oben gegen die Auflagefläche zu drücken. Ein derartiger Niederhalter kann bei relativ leichten Objekten für eine zusätzliche Fixierung sorgen.

Die Ausnehmung kann wenigstens einen linearen Bahnabschnitt umfassen. Der Tastkörper kann innerhalb des linearen Bahnabschnitts verfahren werden und so z.B. einen Wandabstand entlang des Bahnabschnitts ermitteln. Um Wandabstände in unterschiedlichen Richtungen ermitteln zu können, können dementsprechend auch mehrere lineare Bahnabschnitte vorgesehen sein.

Gemäß einer Ausgestaltung umfasst die Ausnehmung einen zentralen Freiraum und wenigstens zwei sich von dem zentralen Freiraum nach außen erstreckende lineare Bahnabschnitte. Der zentrale Freiraum ermöglicht ein Vermessen in beliebigen Richtungen. In dem äußeren Bereich der linearen Bahnabschnitte können Teile des Objekts aufliegen. Die Form der Ausnehmung kann grundsätzlich in vielfältiger Weise an die jeweilige Anwendung angepasst sein. Es muss lediglich sichergestellt sein, dass das zu vermessende Objekt nicht durch die Ausnehmung hindurchfallen kann, also eine ausreichende Auflagefläche auf der Grundplatte vorhanden ist. Auch eine ausreichende Festigkeit der Grundplatte an sich sollte gewährleistet sein.

Die Ausnehmung kann insbesondere kreuzförmig, sternförmig oder rechenförmig sein. Dies ermöglicht eine besonders flexible Vermessung unterschiedlicher Objekte.

Gemäß einer weiteren Ausführungsform ist der Tastkopf mittels des Aktuators zum Messen in mehrere unterschiedliche Höhen verfahrbar. Dies ermöglicht eine besonders flexible dreidimensionale Vermessung von Objekten.

Weiterhin kann wenigstens ein Zentrierelement zum Positionieren eines zu vermessenden Objekts an der Grundplatte angebracht oder anbringbar sein. Dadurch können vor allem besonders kleine Werkstücke auf einfache Weise vorzentriert werden. Beispielsweise kann als Zentrierelement ein Ring an der Grundplatte angebracht werden. Derartige Zentrierelemente sind insbesondere hilfreich, wenn Bohrungen zu vermessen sind, welche nur geringfügig größer als der Durchmesser der Messspitze sind.

An der Grundplatte können Vertiefungen für einen Eingriff mit Vorsprüngen eines Zentrierelements oder umgekehrt vorgesehen sein. Dies ermöglicht eine einfache, schnelle und exakte Positionierung des Zentrierelements auf der Grundplatte.

Die Grundplatte kann an einem Gehäuse angebracht sein, in welchem der Tastkopf und der Aktuator untergebracht sind. Dadurch ist ein besonders einfacher und kompakter Aufbau erzielbar.

Gemäß einer weiteren Ausführungsform ist der Aktuator als dreidimensionales Positioniersystem ausgebildet, welches in mechanischer Verbindung mit der Grundplatte steht. Das dreidimensionale Positioniersystem kann beispielsweise durch Piezomotoren angetrieben sein und eine eingebaute Längenmesseinrichtung aufweisen. Dadurch ist eine exakte Verfahrbarkeit des Tastkörpers innerhalb der Ausnehmung der Grundplatte gewährleistet.

Im Folgenden wird die Erfindung beispielhaft unter Bezugnahme auf die Zeichnungen beschrieben.
- Fig. 1: ist eine vereinfachte Darstellung einer erfindungsgemäßen Objektvermessungsvorrichtung.
- Fig. 2a) bis 2e): zeigen verschiedene Ausnehmungen in Grundplatten für eine Vorrichtung gemäß Fig. 1.
- Fig. 3 bis 6: zeigen weitere Ausgestaltungen von Ausnehmungen in Grundplatten für eine Vorrichtung gemäß Fig. 1.
- Fig. 7: ist eine perspektivische Darstellung einer erfindungsgemäßen Objektvermessungsvorrichtung.
- Fig. 8: ist eine aufgeschnittene Teildarstellung der Vorrichtung gemäß Fig. 7.
- Fig. 9: ist eine weitere aufgeschnittene Teildarstellung der Vorrichtung gemäß Fig. 7, welche den Einsatz eines Zentrierelements zeigt.

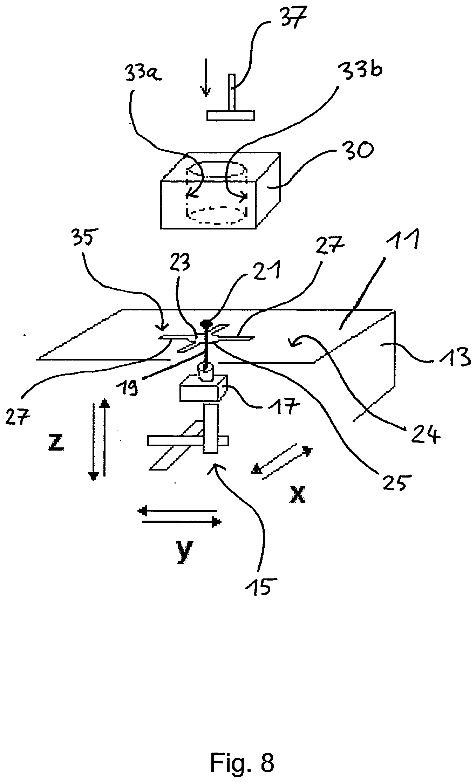

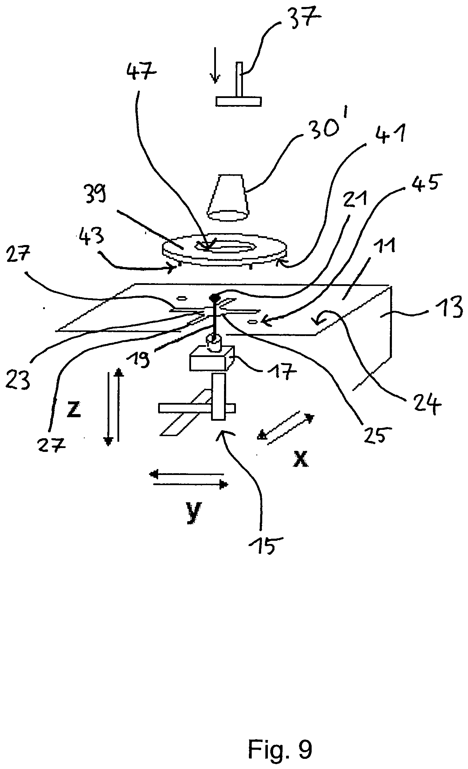

Gemäß Fig. 8 umfasst ein Koordinatenmessgerät eine Grundplatte 11, welche auf einem Gehäuse 13 montiert ist. In dem Gehäuse 13 ist ein Aktuator 15 untergebracht, welcher mechanisch mit der Grundplatte 11 verbunden ist und einen Tastkopf 17 mit einem in diesem gelagerten länglichen Tastkörper 19 trägt. Am vorderen Ende 20 des Tastkörpers 19 ist eine Tastkugel 21 vorgesehen, welche eine Messspitze zum Antasten einer Objektoberfläche bildet. Mittels des Aktuators 15, welcher als dreiachsiges Positioniersystem oder 3D-Schlitten ausgebildet ist, kann der Tastkopf 17 mit dem Tastkörper 19 seitlich und in der Höhe in drei Raumrichtungen x, y und z (Fig. 8 und 9) verfahren werden.

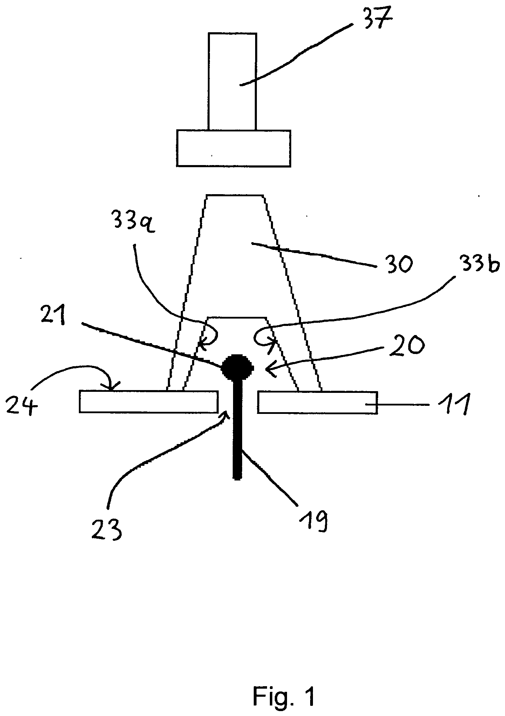

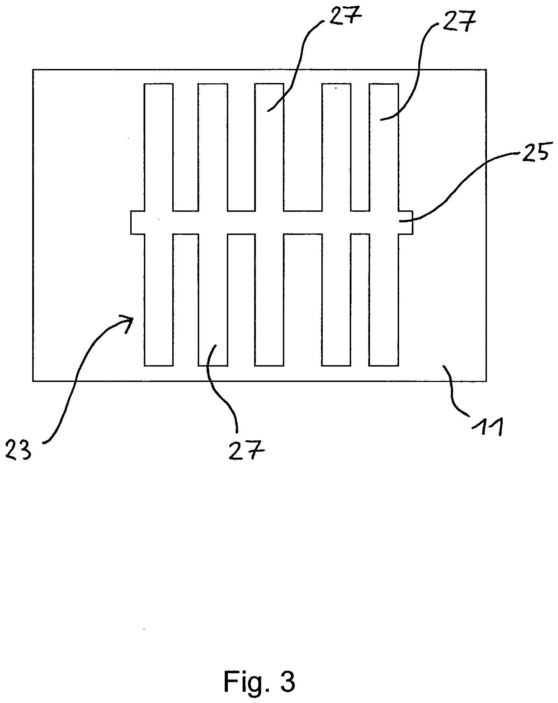

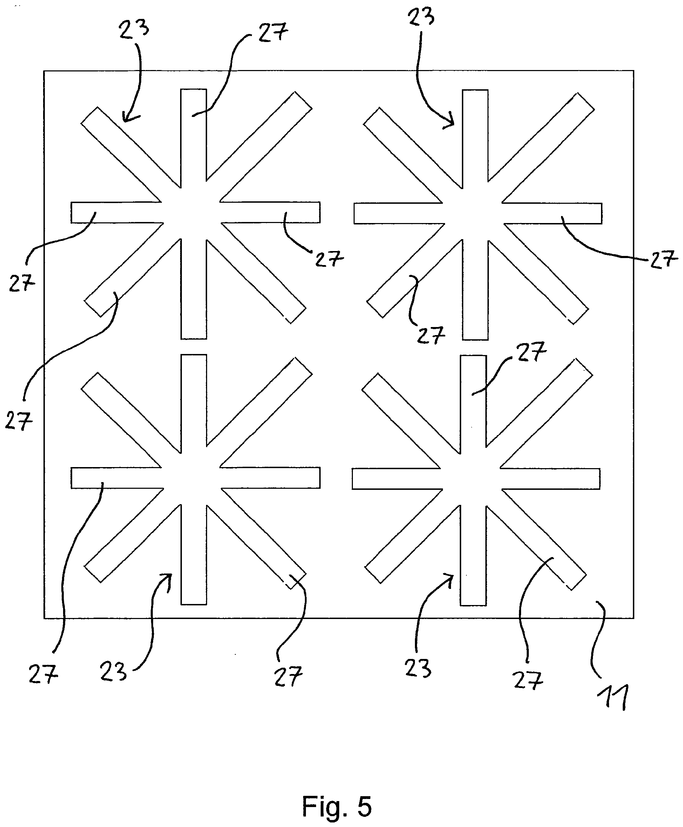

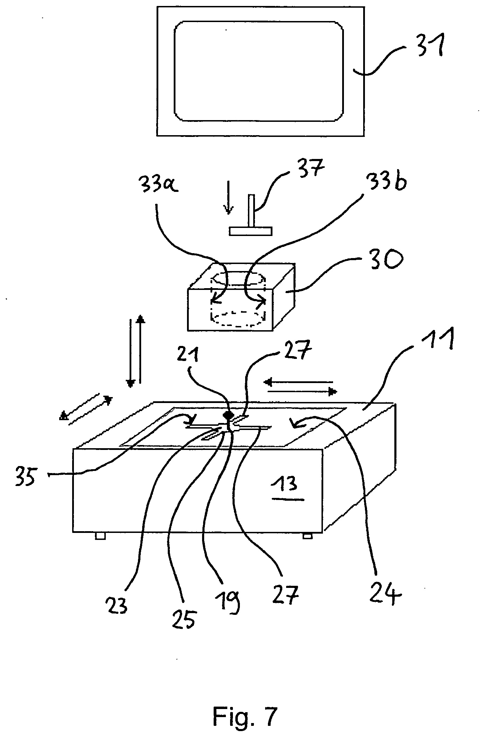

Wie aus Fig. 1 und 7-9 hervorgeht, ist der Tastkopf 17 unterhalb der Grundplatte 11 angeordnet, wobei ein vorderer Abschnitt des Tastkörpers 19 mit der Tastkugel 21 durch eine in der Grundplatte 11 vorgesehene Ausnehmung 23 hindurchragt. Innerhalb der Ausnehmung 23 kann der Tastkörper 19 mittels des Aktuators 15 bewegt werden. Ein zu vermessendes Werkstück 30 wird direkt auf die Grundplatte 11 aufgelegt, welche zu diesem Zweck eine ebene Auflagefläche 24 aufweist. Gemäß Fig. 3-5 ist die Ausnehmung 23 fadenkreuzartig ausgebildet und weist einen zentralen Freiraum 25 sowie vier lineare Bahnabschnitte 27 auf, welche sich von dem zentralen Freiraum 25 aus nach außen erstrecken. Der Tastkörper 19 bewegt sich also entlang der vorgegebenen Bahnabschnitte 27 in der Grundplatte 11. Die Breite der Bahnabschnitte 27 ist kleiner als das Werkstück 30 und größer als die Tastkugel 21 des Tastkörpers 19. Dadurch reicht der Tastkörper 19 von unten durch die Grundplatte 11 hindurch.

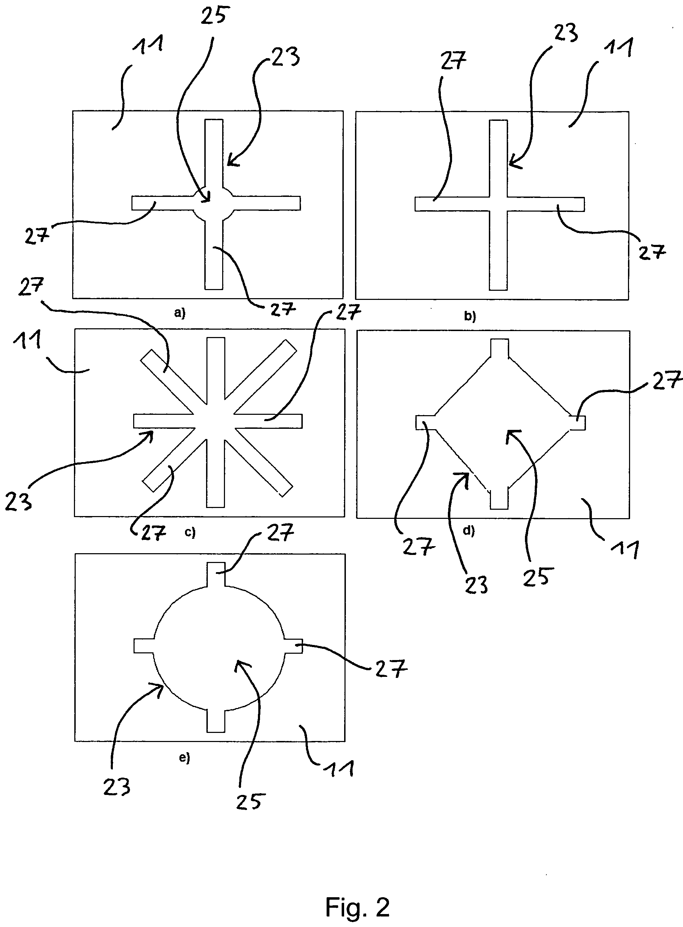

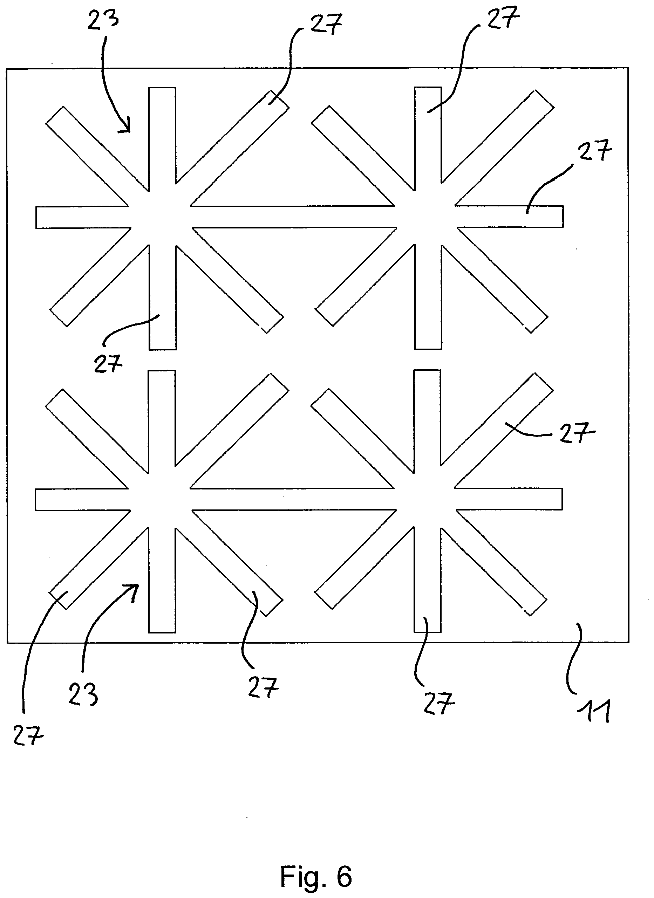

Die Form der Aussparung 23 kann im Übrigen in vielfältiger Weise an die jeweilige Anwendung angepasst sein. Beispielhafte Formen für die Aussparung 23 sind in Fig. 2a) bis 2e) sowie Fig. 3 bis 6 in Draufsicht dargestellt. Es muss lediglich gewährleistet sein, dass einerseits das Werkstück 30 nicht durch die Grundplatte 11 hindurchfallen kann und andererseits die Tastkugel 21 des Tastkörpers 19 das Werkstück 30 von unten antasten kann.

Fig. 3 zeigt eine Ausführungsform, bei welcher der zentrale Freiraum 25 ebenfalls einen linearen Bahnabschnitt bildet. Die weiteren linearen Bahnabschnitte 27 erstrecken sich parallel zueinander und quer zu dem zentralen Freiraum 25, sodass sich insgesamt eine rechenförmige Ausgestaltung der Ausnehmung 23 ergibt. Auf diese Weise wird ein rasterartiges Antasten des Werkstücks unterstützt, was die Flexibilität beim Vermessen unterschiedlicher Objekte erhöht. Insbesondere wird die Vermessung besonders komplex geformter Objekte erleichtert.

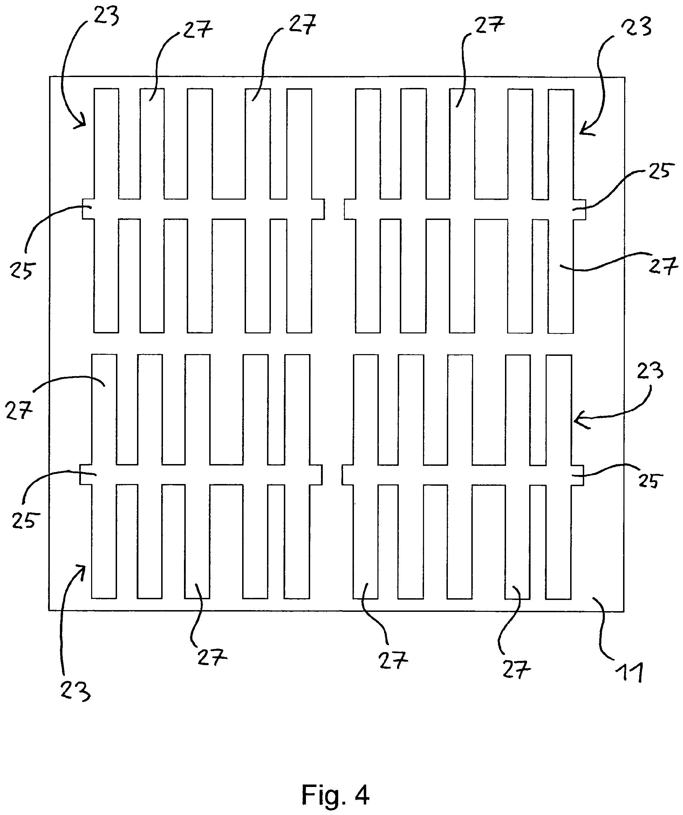

Wie aus den Fig. 4-6 hervorgeht, können auch mehrere voneinander getrennte Ausnehmungen 23 nebeneinander in der Grundplatte 11 vorgesehen sein. Dies kann die Bewegungsmöglichkeiten für den Tastkopf 17 weiter verbessern. Bei der Auswahl der Anzahl, Größe, Form und Anordnung der Ausnehmungen 23 muss jedoch stets beachtet werden, dass eine ausreichende Festigkeit der Grundplatte 11 sichergestellt ist.

Die Position eines angetasteten Messpunkts ist durch die Überlagerung der Position des Tastkopfs 17 und der Position des Tastkörpers 19 bzw. der Tastkugel 21 relativ zu dem Tastkopf 17 bestimmt. Ein Computersystem 31, z.B. ein PC, steuert die Bewegungen des Aktuators 15, erfasst die Antastpunkte, wertet die Positionen aus und stellt das Messergebnis dar.

Zum Vermessen des Werkstücks 30 wird der Tastkörper 19 in das auf der Grundplatte 11 aufliegende Werkstück 30 eingeführt und innerhalb der Ausnehmung 23 verfahren. Speziell kann der Tastkörper 19 nacheinander zwei gegenüberliegende Innenwände 33a, 33b des Werkstücks 30 anfahren, um aus der Verfahrstrecke den Abstand der gegenüberliegenden Innenwände 33a, 33b voneinander zu bestimmen. Aufgrund der fadenkreuzartigen Form der Ausnehmung 23 können Wandabstände in zwei zueinander senkrechten Richtungen x und y ermittelt werden. Da der Tastkörper 19 mittels des Aktuators 15 auch in der Höhe, d.h. in z-Richtung, verfahren werden kann, können derartige Abstandsmessungen auch in unterschiedlichen Höhen des Werkstücks 30 durchgeführt werden. Die Verschiebbarkeit des Tastkörpers 19 in z-Richtung dient außerdem dazu, diesen in das Werkstück 30 einzufahren, nachdem das Werkstück 30 auf die Grundplatte 11 aufgesetzt oder aufgelegt wurde. Der Tastkörper 19 kann zuvor in einer Endposition 35 der Bahnabschnitte 27 als Ruheposition angeordnet sein und nach dem Auflegen des Werkstücks 30 auf die Grundplatte 11 in die Mess- oder Betriebsposition unterhalb des Werkstücks 11 verfahren werden.

Zum Fixieren des Werkstücks 30 auf der Grundplatte 11 ist ein Niederhalter 37 vorgesehen. Mittels des Niederhalter 37 kann das auf die Grundplatte 11 aufgelegte Werkstück 30 während der Messung gegen die Auflagefläche 24 gedrückt und somit festgehalten werden. Bei ausreichend schweren Werkstücken ist der Einsatz des Niederhalters 37 nicht erforderlich.

Um ein positionsgenaues Aufsetzen besonders kleiner Werkstücke 30' auf die Grundplatte 11 zu erleichtern, kann ein Zentrierring 39 verwendet werden. Dieser weist an seiner Unterseite 41 zapfenartige Vorsprünge 43 auf, die mit entsprechenden Vertiefungen 45 in der Grundplatte 11 in Eingriff gebracht werden können. Dadurch ist der Zentrierring 39 in Bezug auf die Grundplatte 11 positionsgenau fixiert. Nun kann das kleine Werkstück 30' in die zentrale Durchführung 47 des Zentrierrings 39 eingesetzt und dadurch exakt positioniert werden. Für unterschiedliche Werkstücke 30' können unterschiedliche Zentrierringe 39 bereitgestellt werden, die jeweils Durchführungen 47 mit verschieden großen Innendurchmessern aufweisen.

### Bezugszeichenliste:

- 11: Grundplatte
- 13: Gehäuse
- 15: Aktuator
- 17: Tastkopf
- 19: Tastkörper
- 20: vorderes Ende
- 21: Tastkugel
- 23: Ausnehmung
- 24: ebene Auflagefläche
- 25: zentraler Freiraum
- 27: linearer Bahnabschnitt
- 30, 30': Werkstück
- 31: Computersystem
- 33a, 33b: Innenwand
- 35: Endposition
- 37: Niederhalter
- 39: Zentrierring
- 41: Unterseite
- 43: Vorsprung
- 45: Vertiefung
- 47: Durchführung

## Patentansprüche

1. Vorrichtung zur Vermessung von Objekten, insbesondere Koordinatenmessgerät, mit
einer Grundplatte (11) zum Stützen eines zu vermessenden Objekts (30, 30'), einem Aktuator (15) und
einem Tastkopf (17), der mittels des Aktuators (15) relativ zu dem Objekt (30, 30') verfahrbar ist, um das Objekt (30, 30') berührend anzutasten,
wobei der Tastkopf (17) einen insbesondere länglichen Tastkörper (19), dessen vorderes Ende (20) als Messspitze (21) für einen Kontakt mit dem Objekt (30, 30') ausgebildet ist, trägt, insbesondere in einer Aufnahme lagert, wobei
der Tastkopf (17) unterhalb der Grundplatte (11) angeordnet ist, und wobei in der Grundplatte (11) wenigstens eine Ausnehmung (23) zum Durchführen zumindest eines Abschnitts des Tastkörpers (19) vorgesehen ist,
**dadurch gekennzeichnet, dass**
der Tastkopf (17) mittels des Aktuators (15) zwischen einer Ruheposition, in welcher der Tastkörper (19) nicht über eine Auflagefläche (24) der Grundplatte (11) hinausragt, und einer Betriebsposition, in welcher der Tastkörper (19) von unten durch die Ausnehmung (23) geführt ist und sich die Messspitze (21) oberhalb der Auflagefläche (24) befindet, verfahrbar ist.

2. Vorrichtung nach Anspruch 1,
**dadurch gekennzeichnet, dass**
die Grundplatte (11) eine insbesondere ebene Auflagefläche (24) zum direkten Auflegen eines zu vermessenden Objekts (30, 30') aufweist.

3. Vorrichtung nach Anspruch 2,
**dadurch gekennzeichnet, dass**
zum Fixieren eines zu vermessenden Objekts (30, 30') auf der Grundplatte (11) ein Niederhalter (37) vorgesehen ist, welcher dazu ausgebildet ist, das Objekt (30, 30') von oben gegen die Auflagefläche (24) zu drücken.

4. Vorrichtung nach zumindest einem der vorstehenden Ansprüche,
**dadurch gekennzeichnet, dass**
die Ausnehmung (23) wenigstens einen linearen Bahnabschnitt (27) umfasst.

5. Vorrichtung nach zumindest einem der vorstehenden Ansprüche,
**dadurch gekennzeichnet, dass**
die Ausnehmung (23) einen zentralen Freiraum (25) und wenigstens zwei sich von dem zentralen Freiraum (25) nach außen erstreckende lineare Bahnabschnitte (27) umfasst.

6. Vorrichtung nach zumindest einem der vorstehenden Ansprüche,
**dadurch gekennzeichnet, dass**
die Ausnehmung (23) kreuzförmig, sternförmig oder rechenförmig ist.

7. Vorrichtung nach zumindest einem der vorstehenden Ansprüche,
**dadurch gekennzeichnet, dass**
der Tastkopf (17) mittels des Aktuators (15) zum Messen in mehrere unterschiedliche Höhen verfahrbar ist.

8. Vorrichtung nach zumindest einem der vorstehenden Ansprüche,
**dadurch gekennzeichnet, dass**
wenigstens ein Zentrierelement (39) zum Positionieren eines zu vermessenden Objekts (30') an der Grundplatte (11) angebracht oder anbringbar ist.

9. Vorrichtung nach zumindest einem der vorstehenden Ansprüche,
**dadurch gekennzeichnet, dass**
an der Grundplatte (11) Vertiefungen (45) für einen Eingriff mit Vorsprüngen (43) eines Zentrierelements (39) oder umgekehrt vorgesehen sind.

10. Vorrichtung nach zumindest einem der vorstehenden Ansprüche,
**dadurch gekennzeichnet, dass**
die Grundplatte (11) an einem Gehäuse (13) angebracht ist, in welchem der Tastkopf (17) und der Aktuator (15) untergebracht sind.

11. Vorrichtung nach zumindest einem der vorstehenden Ansprüche,
**dadurch gekennzeichnet, dass**
der Aktuator (15) als dreidimensionales Positioniersystem ausgebildet ist, welches in mechanischer Verbindung mit der Grundplatte (11) steht.

## Claims

1. An apparatus for measuring objects, in particular a coordinate measuring unit, comprising
a base plate (11) for supporting an object (30, 30') to be measured; an actuator (15); and
a probe (17) which is movable relative to the object (30, 30') by means of the actuator (15) to sample the object (30, 30') in a contacting manner,
wherein the probe (17) carries, in particular supports in a mount, a sampling body (19), in particular an elongate sampling body, whose front end (20) is formed as a measuring tip (21) for a contact with
the object (30, 30'); wherein
the probe (17) is arranged beneath the base plate (11); and wherein at least one cut-out (23) is provided in the base plate (11) for leading through at least one section of the sampling body (19),
**characterized in that**
the probe (17) is movable by means of the actuator (15) between a position of rest in which the sampling body (19) does not project beyond a support surface (24) of the base plate (11) and an operating position in which the sampling body (19) is guided through the cut-out (23) from below and the measuring tip (21) is located above the support surface (24).

2. An apparatus in accordance with claim 1,
**characterized in that**
the base plate (11) has a support surface (24), in particular a planar support surface, for the direct placing on of an object (30, 30') to be measured.

3. An apparatus in accordance with claim 2,
**characterized in that**
a holding-down device (37) is provided which is designed to press an object (30, 30') toward the support surface (24) from above for fixing the object (30, 30') to be measured on the base plate (11).

4. An apparatus in accordance with at least one of the preceding claims,
**characterized in that**
the cut-out (23) includes at least one linear path section (27).

5. An apparatus in accordance with at least one of the preceding claims,
**characterized in that**
the cut-out (23) includes a central free space (25) and at least two linear path sections (27) extending outwardly from the central free space (25).

6. An apparatus in accordance with at least one of the preceding claims,
**characterized in that**
the cut-out (23) is cross-shaped, star-shaped or rake-shaped.

7. An apparatus in accordance with at least one of the preceding claims,
**characterized in that**
the probe (17) is movable into a plurality of different heights by means of the actuator (15) for measuring.

8. An apparatus in accordance with at least one of the preceding claims,
**characterized in that**
at least one centering element (39) is attached or attachable to the base plate (11) for positioning an object (30') to be measured.

9. An apparatus in accordance with at least one of the preceding claims,
**characterized in that**
recesses (45) are provided at the base plate (11) for an engagement with projections (43) of a centering element (39), or vice versa.

10. An apparatus in accordance with at least one of the preceding claims,
**characterized in that**
the base plate (11) is attached to a housing (13) in which the probe (17) and the actuator (15) are accommodated.

11. An apparatus in accordance with at least one of the preceding claims,
**characterized in that**
the actuator (15) is formed as a three-dimensional positioning system which is in mechanical connection with the base plate (11).

## Revendications

1. Dispositif pour mesurer des objets, en particulier appareil de mesure de coordonnées, comportant
une plaque de base (11) pour soutenir un objet à mesurer (30, 30'), un actionneur (15) et une tête de palpage (17') qui est déplaçable par rapport à l'objet (30, 30') au moyen de l'actionneur (15), afin de palper l'objet (30, 30') en le touchant,
dans lequel la tête de palpage (17) porte, en particulier maintient dans un logement, un corps de palpage (19) en particulier oblong dont l'extrémité avant (20) est réalisée sous la forme d'une pointe de mesure (21) pour un contact avec l'objet (30, 30'),
dans lequel la tête de palpage (17) est agencée au-dessous de la plaque de base (11) et
dans lequel est prévu, dans la plaque de base (11), au moins un évidement (23) pour faire passer au moins une portion du corps de palpage (19),
**caractérisé en ce que**
à l'aide de l'actionneur (15), la tête de palpage (17) est déplaçable entre une position de repos dans laquelle le corps de palpage (19) ne dépasse pas au-delà d'une surface d'appui (24) de la plaque de base (11), et une position de fonctionnement dans laquelle le corps de palpage (19) est guidé depuis le bas à travers l'évidement (23) et la pointe de mesure (21) se trouve au-dessus de la surface d'appui (24).

2. Dispositif selon la revendication 1,
**caractérisé en ce que**
la plaque de base (11) comprend une surface d'appui (24) en particulier plane pour poser directement un objet à mesurer (30, 30').

3. Dispositif selon la revendication 2,
**caractérisé en ce que**
pour fixer un objet à mesurer (30, 30') sur la plaque de base (11), il est prévu un élément de retenue vers le bas (37) qui est réalisé pour presser l'objet (30, 30') depuis le haut contre la surface d'appui (24).

4. Dispositif selon l'une des revendications précédentes,
**caractérisé en ce que**
l'évidement (23) comprend au moins un tronçon de voie linéaire (27).

5. Dispositif selon l'une des revendications précédentes,
**caractérisé en ce que**
l'évidement (23) comprend au moins un espace libre (25) central et au moins deux tronçons de voie linéaires (27) qui s'étendent depuis l'espace libre (25) central vers l'extérieur.

6. Dispositif selon l'une des revendications précédentes,
**caractérisé en ce que**
l'évidement (23) est cruciforme, en étoile ou en forme de râteau.

7. Dispositif selon l'une des revendications précédentes,
**caractérisé en ce que**
pour le mesurage, la tête de palpage (17) est déplaçable à plusieurs hauteurs différentes à l'aide de l'actionneur (15).

8. Dispositif selon l'une des revendications précédentes,
**caractérisé en ce que**
au moins un élément de centrage (39) est monté ou susceptible d'être monté sur la plaque de base (11) pour positionner un objet à mesurer (30').

9. Dispositif selon l'une des revendications précédentes,
**caractérisé en ce que**
sur la plaque de base (11) sont prévus des renfoncements (45) destinés à un engagement avec des saillies (43) d'un élément de centrage (39), ou inversement.

10. Dispositif selon l'une des revendications précédentes,
**caractérisé en ce que**
la plaque de base (11) est agencée sur un boîtier (13) dans lequel sont logés la tête de palpage (17) et l'actionneur (15).

11. Dispositif selon l'une des revendications précédentes,
**caractérisé en ce que**
l'actionneur (15) est réalisé sous la forme d'un système de positionnement tridimensionnel qui est en liaison mécanique avec la plaque de base (11).
